# EUROPEAN PATENT APPLICATION

(11) **EP 3 839 288 A1**
(43) Date of publication of application: **23.06.2021**
(21) Application number: 19218833.2
(22) Date of filing: 20.12.2019
(51) Int. Cl.: F16G 11/10, F16M 11/04, F16M 11/38

(54) **BACKSUPPORT STRUCTURE FOR SCREENS**

(71) Applicant: Production Resource Group, LLC, New Windsor, NY 12553-5533 (US)
(72) Inventor: FICHEFET, Marc, 8400 Oostende (BE); OPSOMER, Frederic, 8610 Kortemark (BE)
(74) Representative: Brantsandpatents bvba

(57) **Abstract**

The current invention relates to a compact backsupport structure and kit for supporting screens, in particular for modular LED screens, allowing easy and quick deployment. Furthermore, it relates to a configuration of the backsupport structure in use, and a method of setting up the structure.

## Description

### FIELD OF THE INVENTION

The present invention pertains to the technical field of back trussing for support of large scale (electronic) screens and displays, for instance at concert venues, festivals, sport events and typically outdoor locations.

### BACKGROUND

In the past years, where large scale (electronic) screen displays (several meters broad and high, for instance background at festivals), often made from modular subscreens, have become increasingly available, both due to a reduction in price and an improvement in quality, the threshold to set up such facilities has reduced. Many smaller venues can now employ these techniques, while the size of these screens continues to increase.

However, safety precautions have not (always) been taken care of, and especially given the increased availability, this has been largely ignored, amongst other to cut costs and setup time. In many cases, the structures travel along with a production, or are needed at different locations in limited time (and purchasing a second 'set' would be very costly). In order to increase the speed of setting up, safety measures are often skimped on, with potentially disastrous consequences (Pukkelpop 2011, Coachella desert storms, 2019 concert in Essen, etc.).

It is especially windy circumstances that create an extremely dangerous situation, where the large scale screen installations function as sails, catching the wind and creating enormous tensions and forces on both the links between the modular subscreens and also on the support structures (typically arched trussings on which the screen is suspended). These structures tend to only focus on supporting the weight of the screen, and keeping the screen in place, but do not take into account the forces generated by a head-on wind (at least partially) perpendicular to the screen.

In more permanent screen structures, the above issue is less apparent, as equally more permanent trussing can be provided to support the screen structures to counter 'perpendicular' wind forces. The increase in set-up time is irrelevant, as the structures aren't meant to be packed and unpacked in short time.

The invention aims to provide for an easily deployable, light-weight and compact back trussing for supporting large scale screen displays, as well as a method for setting up said back trussing, wherein the goal of the back trussing is to compensate for forces perpendicular to the screen displays, and the results thereof.

### SUMMARY OF THE INVENTION

The present invention and embodiments thereof serve to provide a solution to one or more of above-mentioned disadvantages. To this end, the present invention relates to a kit for a back trussing or wind bracing structure according to claim 1, for use in securing large scale screen structures, and especially modular (LED) screens. Additionally, the invention relates to the deployed back trussing or wind bracing assembly of the associated claims, as well as the method for setting up said back trussing or wind bracing.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** shows a guiding rod according to an embodiment of the invention.
**Figure 2** shows a connector rod according to an embodiment of the invention.
**Figure 3A-3B** show configurations of a deployed set of guiding and connection rods according to an embodiment of the invention.
**Figure 4A-4E** show a sequence of steps according to an embodiment of the invention for setting up a back trussing assembly according to an embodiment of the invention.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.
The term "connection means" refers to an element suitable for interconnecting the guiding rods with a screen panel, typically wherein the interconnection can be locked and unlocked.
The term "trussing connection means" refers to an element suitable for interconnecting the connector rods with a truss, typically wherein the interconnection can be locked and unlocked. This can for instance be a clamp for instance.
The term "clamping means" refers to an element adapted for clamping a cable, such as a ratchet clamp or rope jammer.
The term "directional tensioning means" refers to an element adapted to allow passage of a cable in a first direction, and blocking passage in the opposite direction, such as a cam cleat.
The term "secondary guiding means" refers to a guiding element adapted to withstand force and pressure.
The term "cable" as used in this text is to be considered as equivalent to rope, wire and any other means that essentially extends in a single direction (longitudinally). The term does not infer a certain minimal or maximal diameter, nor any other strict requirements regarding material choice or physical properties, such as elasticity, flexibility, as these can vary depending on the use of the invention. Nevertheless, it should be foreseen that in most cases, the cable or rope will have a certain flexibility (allowing it to be rolled up and deployed easily). A specific example of material choice for such a cable could be Dyneema®, which is a Ultra High Molecular weight Polyethylene or High Modulus Polyethylene fibre.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.,* any ≥ 3, ≥ 4, ≥ 5, ≥ 6 or ≥ 7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention relates to a kit for back trussing for screens, preferably for LED screens, and most preferably for modular (LED) screens, according to claim 1.

Note that elements being "adapted to be removably fixed" refers to the fact that the elements can be fixed (locked) in a certain position, and can withstand considerable force in this fixed status. The elements can be unlocked from said fixed position again afterwards.

In a preferred embodiment, the locking can for instance be achieved by rotation of a (magnetic) element - for instance a so-called plug - that causes one or more pins to extend or retract into locking positions on the rods. The locking positions can be provided over the length of the rods at predetermined distances to offer sufficient positions.

The rods are rigid in a sense that they are not meant to bend substantially, and are furthermore strong enough to withstand considerable forces (perpendicular to the longitudinal axis of the rod) without breaking.

Note that a kit may comprise several sets of the above (two connector rods and a number of guiding rods). However, using a single set is sufficient for deploying a back trussing at a single level which in some case can be sufficient. In practice, a number of sets will be necessary for securely bracing a full screen at several levels (heights).

In a preferred embodiment, the kit comprises at least three, preferably at least four or five, guiding rods (per set), to allow for an optimal setup and processing of forces and tensions acting on the screen. The advantages of this are discussed further in this document.

The advantages of the proposed kit are clear. By using cables and the kit of the invention instead of fixed structures as backing for a screen (effective truss beams for instance), the deployment time is severely reduced as these can be easily fixed to the screen and attached to the support structure for the screen (for instance an truss archway frame). Furthermore, the weight and volume of the overall structure when packed up is much lower, simplifying transport, logistics and setup, which is highly desirable. Additionally, due to allowing the use of cables instead of a fixed back trussing, more flexibility is possible which is crucial in situations where the exerted forces and tensions can rapidly change, such as in windy conditions. Lastly, the proposed solution allows for a low-fi product that can be employed in smaller structures where wind bracing is still necessary, while also reducing cost.

In a preferred embodiment, the cable guides of at least one, preferably all, of the guiding rods, and more preferably also of the connector rods, are configured for guiding the cable across the longitudinal axis of said rods. It should be understood that across means to intersect with said longitudinal axis. This ensures that minimal angular momentum is accomplished by resulting forces, allowing the rods to efficiently handle said forces without danger of failure. As for the connector rods, in the most preferred embodiments, the cables are guided by the cable guides in a plane that comprises said longitudinal axis for the same reason. However, it is not strictly necessary that the cable actually crosses said axis, whereas this is the case for the guiding rods where the cable needs to continue on past the guiding rods, to a next rod.

In a preferred embodiment, at least one, but preferably all, of the cable guides of the guiding rods or (preferably and) connector rods comprises a directional tensioning means, said directional tensioning means adapted for allowing passage of a cable in a first direction, and counteracting (preferably disallowing) passage of the cable in a second direction opposite to the first direction. A typical example of such a directional tensioning means is a cam cleat. Using such a means allows for a fast and easy deployment and tensioning of the kit to an appropriate configuration. In a further preferred embodiment, the cable guides comprising a directional tensioning means are further provided with at least one secondary guiding means for directing the cable passing through the directional tensioning means, said secondary guiding means furthermore adapted to delimit non-longitudinal movement of the cable with respect to the rod. The secondary guiding means can be in the form of an opening or ring that guides a cable towards the passageway of the directional tensioning means for a cable. This prevents the tensioning means to be undergoing high forces that are substantially non-parallel in view of the direction of the passageway, as this could undermine its functionality, or even cause the tensioning means to allow the cable to move in the second (closed) direction.

In an even further preferred embodiment, the secondary guiding means is positioned in view of the directional tensioning means towards the first direction, as it is especially from this direction that non-parallel forces may influence the tensioning means.
Most preferably, a secondary guiding means as described above is provided in both directions from the tensioning means.

In an especially preferred embodiment, the secondary guiding means is distanced from the directional tensioning means at most over a distance of 2.0 cm, preferably at most 1.5 cm, even more preferably at most 1.0 cm, most preferably at most 0.75 cm or even less, such as 0.5 cm. We note that this reflects the shortest distance between the "opening" of the directional tensioning means where a cable is supposed to contact the directional tensioning means, and the secondary guiding means, thus essentially defining the 'free' length of the cable between said elements.

It should be understood that in a preferred embodiment, each cable guide of the guiding rods, and optionally the connector rods, is provided with a directional tensioning means, and optionally one or two secondary guiding means.
Preferably, the directional tensioning means provided on cable guides on the same rod are oriented so the first direction of said tensioning means are the same.

In a preferred embodiment, at least one of the cable guides of the connector rods (and optionally of the guiding rods) comprises a clamping means, preferably a rope jammer or ratchet clamp, adapted for fixating a cable longitudinally.
Furthering the securing of the cables held by the cable guides, a clamping means assists in assuring that the cables can be properly fixated once the rods are correctly positioned. Note especially that the cable guides, with or without tensioning means allow a first guided positioning of the rods along the length of the cables (for instance when already connected to the screen), after which the clamping means can be locked to fix the position once correct. The combination with directional tensioning means is especially advantageous in this perspective.

In a preferred embodiment, the cable guides of the connector rods are provided with two rounded guide elements. These guide elements are adapted for guiding the cables fluently in an angle, and can furthermore be rotatable around an axis perpendicular to the direction in which the cable extends to ensure minimal friction. Between the two guide elements, the clamping means is provided, whereby the cable is provided to run over a first of the guide elements, then through/over the clamping means to allow fixation, and then over the second guide element.

In a preferred embodiment, the kit comprises one or more sets of connection elements for interfacing the connection means of the guiding rods with the screens. The connection elements are adapted to releasably engage at a first end with the connection means, preferably said connection elements comprising a second end provided with a screw thread for interfacing with an associated screw thread opening of the screen. It is noted that in most occasions of LED screens, these are at the backside provided with coupling means of their own, typically a screw thread opening, for connection to larger structures. By providing a set of connection elements, the coupling can be efficiently achieved, as the connection elements can be easily affixed to the screens first and then coupled through more elaborate means to the rods. Additionally, providing a plurality of sets would allow the kit to be (more) universally usable with different varieties of screen.
In a further preferred embodiment, the connection means comprise a securing mechanism for locking onto the connection element once interfaced correctly. Said securing mechanism can be opened and locked manually.

In a preferred embodiment, the guiding and/or connector rods comprise rails over at least part of the length thereof, and wherein the cable guides are slidably or rollably movable via said rail. Preferably, the rails are disposed on the inside of the rods. Most preferably, each of both the guiding and connector rods is provided with rails as discussed above.

Most preferably, two separate sets of rails is provided on each rod over which each of the cable guides can move, each extending over slightly under half of the total length of the rod, with both sets running as an extension to each other. This ensures a minimal spacing between the cables, as well as ensuring that the cables run in a single plane.

In a preferred embodiment, the trussing connection means is movable along at least part of the length of the connector rods, whereby said trussing connection means is adapted to be removably fixed in position along the length of the connector rods. The movable trussing connection means allows the connector rods to be adaptable to the situation (different dimensions of trussing, objects that would block certain configurations of the trussing connection means, etc.).

Preferably, the connection means is universal, in that it is adapted to interface with and connect to a wide variety of screens, and being removably fastenable to the screens in a mechanical fashion.

In a preferred embodiment, the length of the rods ranges between about 75 cm and 150 cm, preferably between 90 cm and 135 cm, more preferably between 100 cm and 125 cm. This allows the forces on the screen to be relieved sufficiently, while remaining compact and light to ensure easy maneuverability and handling by operators.

In a preferred embodiment, the length along which each of the cable guides are movable along the length of the guiding (and/or connector) rods is at least 30 cm when both cable guides are limited to a separate section of rails. Preferably, the length along which each of the cable guides are movable along the guiding (and/or connector) rods is at least 35 cm, more preferably at least 40 cm, even more preferably at least 45 cm.
Most preferably, each of the cable guides of the guiding rods are from a central position adjacent to the middle of the rod (at least within 5-10 cm) up to a position at the respective ends (again, within 5-10 cm at the least).
Similar notions apply to the trussing connection means.

In case a single rail is used on each rod to convey both cable guides, the length over which the cable guides are movable is doubled, with the rail extending essentially from one end to the other end of the rod.

In a preferred embodiment, the cable guides are adapted to prevent rotation of the cable guide around the longitudinal axis of the guiding and/or connector rods.

In a preferred embodiment, the guiding rods are essentially cylindrical, and comprise two longitudinal mantle sections, said mantle sections being connected to each other at their respective ends via end spacer elements, and at an interior position, preferably near the middle of the mantle sections, via a middle spacer element, said end spacer elements being functional as connection means adapted for removably affixing the guiding rods to the screens. A possible embodiment of this is depicted in the figures. More preferably, the mantle sections define a rail system, wherein the cable guides are positioned between the two mantle sections, and are rollably or slidably movable along at least part of the length of the rods over said rail system. The rail system is hereby provided on the interior face of the mantle sections. Note that the above can also be achieved in other variants, such as an essentially beam-shaped structure, wherein the mantle sections are longitudinal side sections.

In a preferred embodiment, the connector rods are an essentially hollow structure, with an internal rail system. The rods comprise two longitudinal side sections, positioned oppositely from each other with respect to the longitudinal axis of the rod, and are connected to each other at their respective ends via end spacer elements, and at an interior position, preferably near the middle of the side sections, via a middle spacer element. The rail system is provided on the interior face of the longitudinal side sections.

The cable guides in the above embodiments are positioned in between the longitudinal side sections/mantle sections, which furthermore protects the mechanism used therein, while the surrounding structure acts as an additional securing of the cable.

In a second aspect, the invention pertains to a back trussing assembly which is deployed and mounted on an arched support structure, said back trussing assembly comprising a plurality of elongate, rigid rods, said plurality of rods comprising:
a. two connector rods, each of said connector rods comprising:
   i. at least one, preferably at least two, trussing connection means for removable fixation to fixed support structures;
   ii. at least two cable guides, whereby said cable guides are adapted to be removably fixed in position along the length of the connector rods, and said cable guides being adapted for guiding a cable and fixing said cable at a position along the length of the connector rods, preferably each of said cable guides being movable along at least part of the length of the connector rods;
b. at least four guiding rods, said guiding rods comprising:
   i. at least two cable guides, each of said cable guides being movable along at least part of the length of the guiding rods, whereby said cable guides are adapted to be removably fixed in position along said length of the guiding rods, and said cable guides being adapted for guiding a cable and fixing said cable at a position along the length of the connector rods;
   ii. a connection means at a first end of the guiding rods, said connection means being adapted for removably affixing the guiding rods to the screens;
said back trussing assembly further comprising at least two cables, said cables being affixed at a first end to separate cable guides of a first connector rod and at the second end to separate cable guides of the second connector rod, whereby each of said cables run through a separate cable guide of each of the guiding rods in a sequence, said guiding rods being spaced apart along the length of the cables;
wherein the connector rods are each affixed to opposite support columns of the arched support structure, preferably at similar height, via the trussing connection means, and wherein the guiding rods are each affixed to the screens via the connection means;
wherein the cable guides of the connector rods are positioned to distance the cables from each other over at least 70 cm;
wherein the cable guides of the guiding rods are positioned to distance the cables from each other over at least 60 cm over a central region along the length of the cables;
wherein the cables cross at least once, preferably only once, in each region flanking the central region.

Preferably, the cables cross at a position which is within a distance of a connector rod that is at most 25%, preferably at most 20% or even 15%, of the total length of the cables.

Preferably, the guiding and connector rods are according to an embodiment of the first aspect of the invention.

Note that in a preferred embodiment, the cable guides are provided with directional tensioning elements, such as cam cleats, which allow movement of a cable in a first direction, but block it in the opposite direction. In this light, in a preferred embodiment of the configuration, the tensioning elements are aligned to ensure that the first directions are the same. Note that in the method of setting up the back trussing assembly, this is also preferably reflected. By doing so, the cables of the back trussing assembly can be tensioned in a single movement.

In a third aspect, the invention relates to a method of setting up back trussing support for (modular) (LED) screens suspended from an overarching structure, and secured to side elements (trussing typically).

In a final aspect, note that the guiding rods and connector rods according to the embodiments of the invention are also claimed individually. Furthermore, kits comprising only a plurality of guiding rods (with or without cable sections) also form part of the claimed invention, as these can be used modularly to 'lengthen' pre-existing kits. In view of this, additionally kits comprising only a singular connector rod and one or more guiding rods may be considered part of the claimed invention as well, as is a kit comprising only 2 connector rods.

The invention is further described by the following non-limiting examples which further illustrate the invention, and are not intended to, nor should they be interpreted to, limit the scope of the invention.

The present invention will be now described in more details, referring to examples that are not limitative.

### EXAMPLES AND DESCRIPTION OF FIGURES

### EXAMPLE 1 - Guiding rod

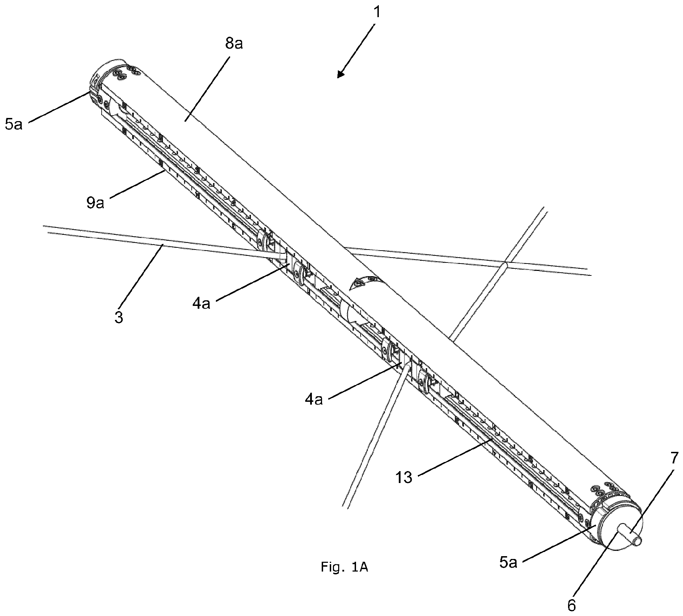

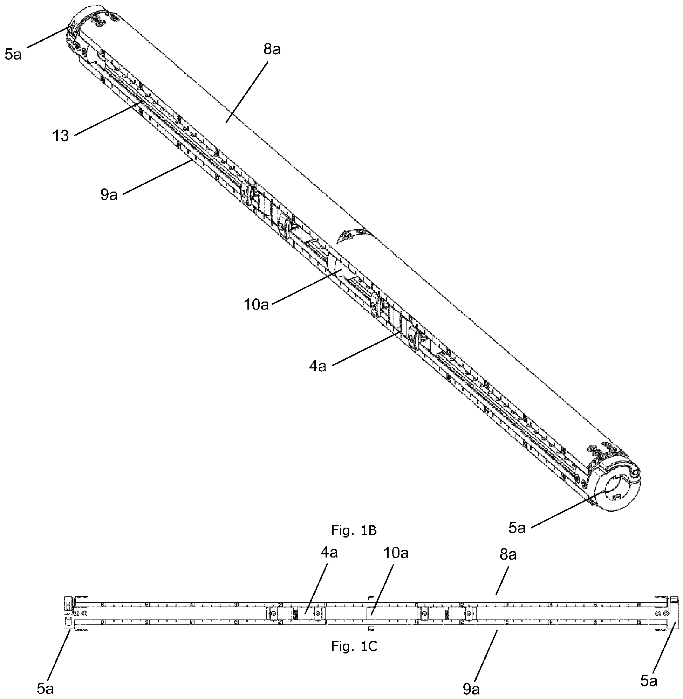

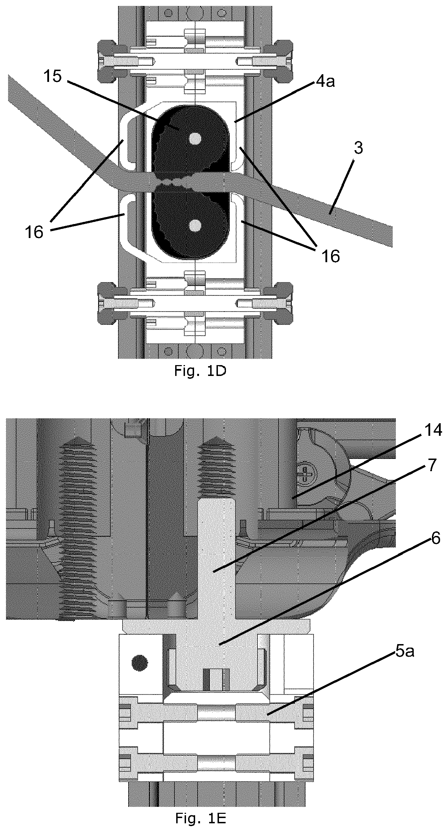

Figures 1A-G show a guiding rod according to a possible embodiment of the invention. The rod itself is elongate, and substantially straight. In this embodiment, the rod has a substantially cylindrical or even square cross-section which remains substantially constant from end to end, in this case about 6.0 cm, although it should be understood that this can be varied depending on the situation and needs.

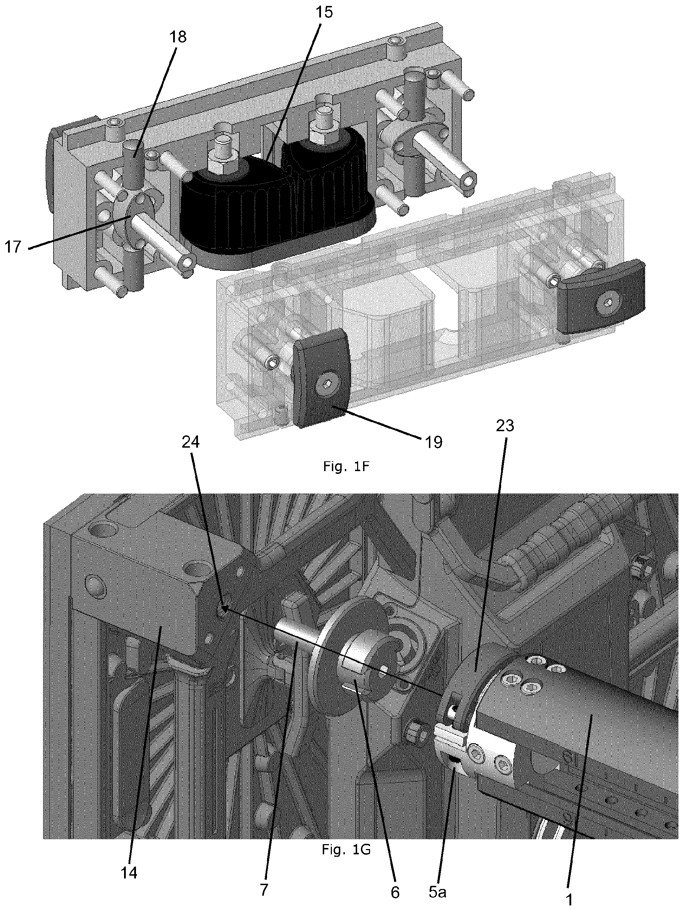

The guiding rod comprises of two longitudinal mantle sections (8a, 9a) which would define a cylinder. Note that the cylindrical shape in this case is a mere example and other forms are possible. Said mantle sections (8a, 9a) are connected at the ends by end spacer elements (5a), and at the middle by a middle spacer element (10a), where the middle spacer element is optional for improved strength. This provides for a longitudinally extending free space between the mantle sections in which cable guides (4a) are provided and can be moved longitudinally. In the embodiment, an internal rail system (13) is provided on the inside of both mantle sections (8a, 9a) to convey the cable guides (4a) slidably or rollably. The end spacer elements (5a) are furthermore adapted to comprise (or form by itself) the connection means for attachment to screens (14). To this end, connection elements are provided which interface the connection means (5a) to a screen (14). On a first end of the connection element (6), these can couple to the connection means (5a), wherein said coupling can be locked and unlocked (manually), for instance via a clamp (23). On the opposite end, the connection elements (6) comprise a screw thread extension for coupling to a screw thread opening (24) on the screen (or screen support structure) (14). This is shown in an example in Fig. 1G. Note that the connection means for attachment to a screen can be provided either at both ends or at a single end of the guiding rod, though preferably at both.
In the embodiment with a middle spacer element (10a) provided, each cable guide (4a) can essentially be moved over one half of the length of the rod. Without the middle spacer rod, or under a different configuration (for instance wherein the middle spacer element allows passage), the cable guides could move over almost the entire length.
The cable guides (4a) comprise a directional tensioning means (15), in this case cam cleats, which allow movement of a cable (3) in one direction and block it in the other direction. Secondary guiding means (16) are provided in each direction from the cam cleat (16) to properly guide the cable (3) to a from the cam cleat (15), and bearing the brunt of any non-longitudinal forces exerted by the cable (3). The above is shown for instance in Figs. 1A, 1C, 1D and 1F.
The locking mechanism of the cable guide (4a) can be seen in Fig. 1F in an exploded view. On the inside, a lock element such as a plug (17) causes one or more pins (18) to extend or retract into or from locking positions on the rod itself. Preferably, the lock element (17) can be actuated from the outside via an actuator (19) that requires a suitable tool for actuation, in this case rotation. By moving the pins (18) into the locking positions, the cable guide (4a) is fixed in position along the length of the rod. Note that the same principle applies to the cable guides (4b) of the connector rod (2) and/or the trussing connections means (11, 12) thereof.

In the embodiment of Figures 1A-G, the shape of the (cross-section of the) guiding rods (1), and the matching shape of the cable guides (4a), specifically the "embrace" by the mantle sections (8a, 9a) of the guiding rod (1), allow the cable guides to be linearly movable along part of the length of the guiding rod, while disallowing rotation around its longitudinal axis. As can be readily understood by the person skilled in the art, variation on the shape of the cross-sections are possible to achieve this effect.

In the embodiment of Figures 1A-G, the guiding rod has a length of about 100-110 cm, preferably about 105 cm, and its cross-sectional diameter is between 5.0 cm and 7.0 cm, preferably about 6.0 cm. Of course, variation on these dimensions may be possible, for instance when dealing with larger or smaller installations, or when the safety requirements are higher (such as in very windy conditions).

### EXAMPLE 1 - Connector rod

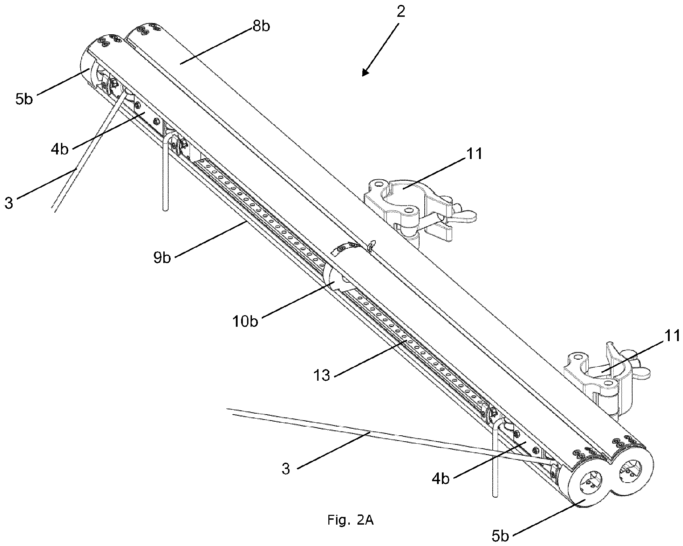

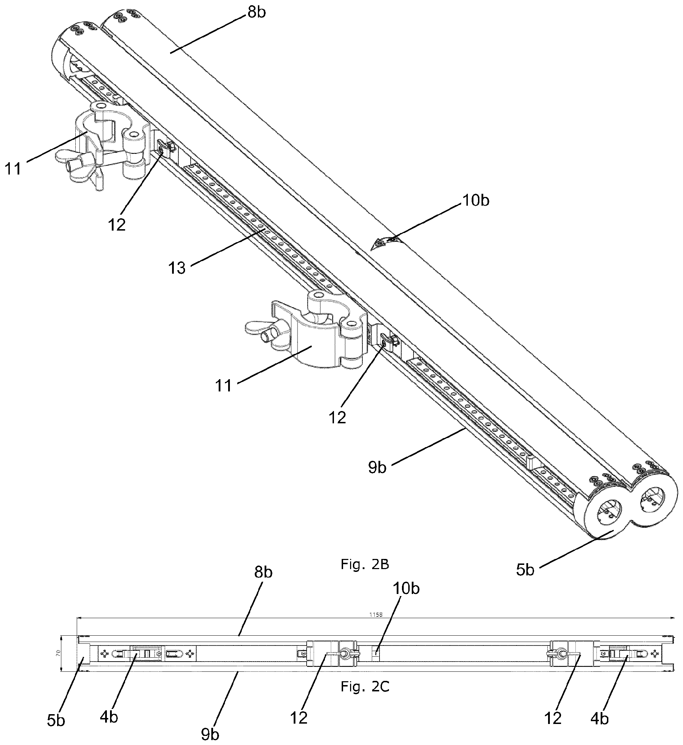

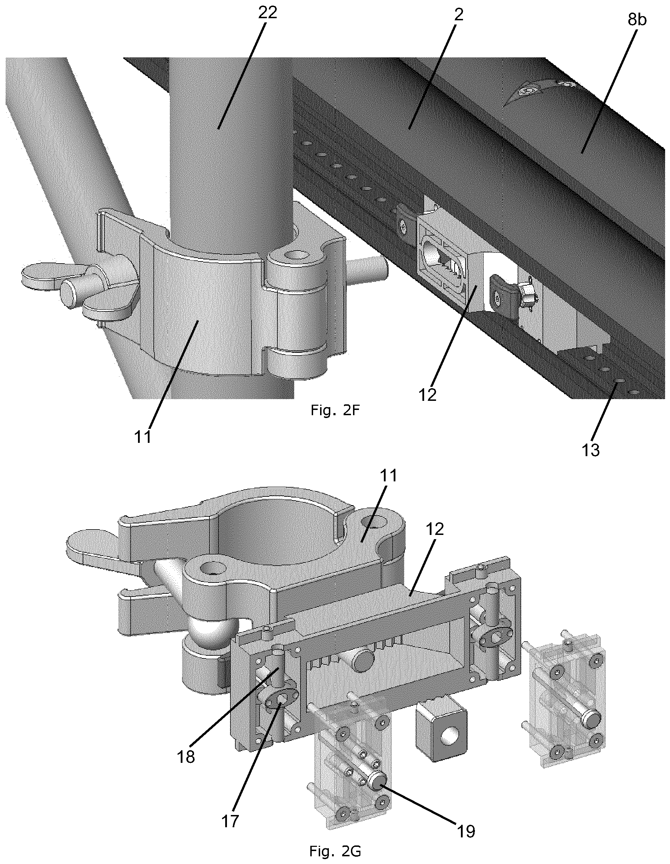

Figures 2A-G show a connector rod (2) according to a possible embodiment of the invention. The connector rod itself is elongate, and substantially straight. In this embodiment, the connector rod comprises of two longitudinal side sections (8b, 9b). Said side sections (8b, 9b) are connected at the ends by end spacer elements (5b), and at the middle by a middle spacer element (10b), where the middle spacer element is optional for improved strength. This provides for a longitudinally extending free space between the side sections in which cable guides (4b) are provided and can be moved longitudinally. In the embodiment, an internal rail system (13) is provided on the inside of the side sections (8b, 9b) to convey the cable guides (4b) slidably or rollably. A second rail system (13) is provided in which trussing connection means (11, 12) are movable according to the same principle. Said rail systems are essentially parallel to allow the trussing connection means and the cable guides respectively to move independently from each other. Note that in the embodiment of the Figures, the middle spacer element (10b) is only present in the rail system wherein the cable guides (4b) are conveyed, but variants are considered wherein said spacer element is present in the second rail system, or in both, as well as variants where the spacer element allows passage of the cable guide/trussing connection means.

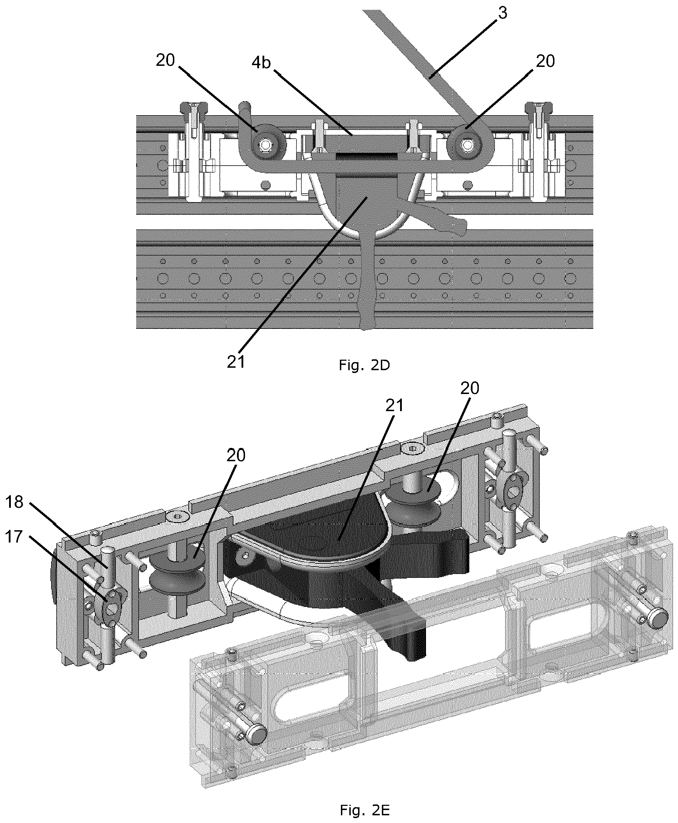

Fig. 2D and 2E show the cable guide (4b) of the connector rods (2), which differs slightly from that of the guiding rods as it needs to entirely fixate the cable (3). This is achieved by employing two rounded guide elements (20) to guide the cable (3) from and to a clamping means, in this case a rope jammer (21) between the two guide elements (20). The clamping means can be manually locked and opened.
The position of the cable guide (4b) and the trussing connection means (11, 12) can be fixed via the same principle as for the cable guides (4a) of the guiding rods (1) described above, again exemplified in Fig. 2E and 2G.

The trussing connection means (11, 12) can be coupled to a trussing (22), and can be oriented according to need (in this case for coupling to an upstanding truss).

At both ends, an end section is provided which comprises a widened element that, amongst others, functions as a limiter for the cable guides, but furthermore can serve as an impact cushion. Two cable guides are provided to each rod, and can be moved along its length. Additionally, the cable guides are adapted to allow them to be (reversibly) locked in position along the length of the connector rod.
Again, the shape of the (cross-section of the) connector rods, and the matching shape of the cable guides, specifically the "embrace" by the cable guides of the connector rod, allow the cable guides to be linearly movable along the length of the connector rod, while disallowing rotation around its longitudinal axis. As can be readily understood by the person skilled in the art, variation on the shape of the cross-sections are possible to achieve this effect. In general, any non-circular shape would disallow rotation.
The cable guides are furthermore provided with a clamping means, in this case a ratchet clamp that can be opened and closed by a user to pull a cable that extends through the directional tensioning means tight. Again, other options exist to tighten the cable, as should be apparent to the person skilled in the art. It is however the combination of the directional tensioning means and the clamping means at the connector rod, that gives an additional level of security which is crucial at the connector rods.
In the embodiment of Fig. 2A-G, the connector rod has a length between 110 cm and 130 cm, preferably about 120 cm, and its longest transversal dimension being between 10.0 and 15.0 cm, preferably about 12.0 cm, with the smallest transversal dimension being between 5.0 and 9.0, preferably about 6.0-8.0 cm.

### EXAMPLE 3 - Configuration of deployed back trussing

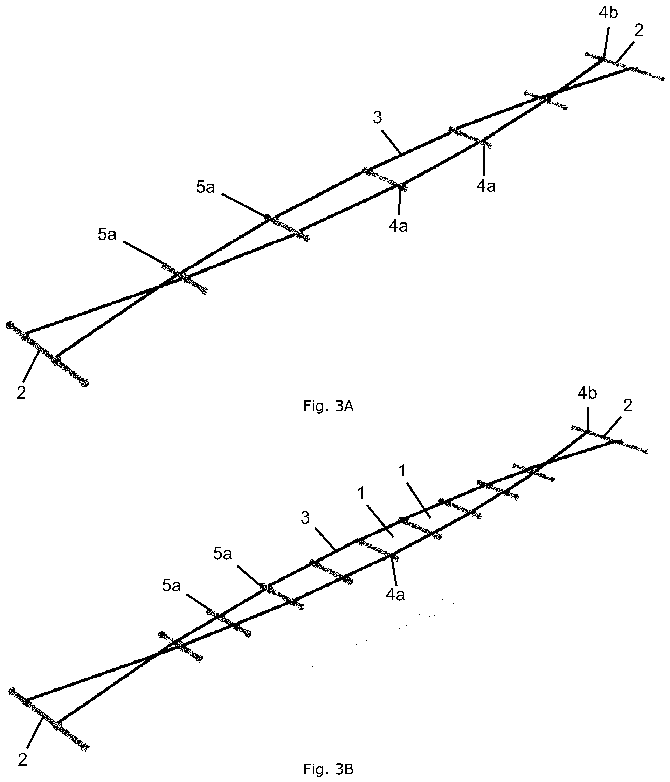

Figure 3A and Fig. 3B disclose two possible set-ups for the back trussing at a certain level. Two connector rods (2) are provided at each end, with a number of guiding rods (1) therebetween, depending on the need of the situation. It should be noted that the distance between each rod can be individually chosen based on availability of the trussing itself, and on the situation (number of separate panels in the screen on each row, size of the screens, distance between truss legs and the sides of the screen, ...). Nonetheless, the general concept remains unchanged in both renditions.

Between the two connector rods (2), a number of guiding rods (1) is provided, wherein the rods are substantially parallel. Two cables (3) extend between the two connector rods, and are fixed thereto at cable guides (4b) (preferably at or near the respective ends of the cables). The cables each run via a separate cable guide (4a) on each guiding rod, and are also fixed at said cable guide (4a).
By 'fixed', it is meant that the cable guides maintain a position along the length of the cables. Before fixation however, the cable guides and cable can move more freely in order to find a correct position.
The cable guides (4b) of the connector rods (2) are positioned at a predefined distance from each other allowing sufficient stability. Although this can vary depending on the exact situation, a minimal distance of at least 70 cm, more preferably at least 80 or 90 cm, is desirable. In conclusion, as can be seen on the Figures, the cable guides (4b) of the connector rods should not be positioned close to each other. Slightly before (preferably), or slightly after, the guiding rods (4a) most proximal to each connector rod, the cables cross each other, although in configurations with more guiding rods, this need not necessarily be the case. After this, the cables diverge from each other and preferably reach at least 60% or even 80% of their maximal distance from each other at the next guiding rod.

In case of Fig. 3A, the cables are at maximal distance at the middle guiding rod. In Fig. 3B, the cables are at maximal distance at the two middle guiding rods, and run essentially parallel to each other therebetween, while the trajectory to the next guiding rods is still largely parallel, with an angle of at most 20°, preferably at most 15°.
The above results in a configuration which gives maximal support to the separate panels/entire screen, distributes forces more evenly to avoid catastrophical failure, and is tensioned to withstand substantial forces exerted on the screen.

### EXAMPLE 4 - Method of setting up back trussing

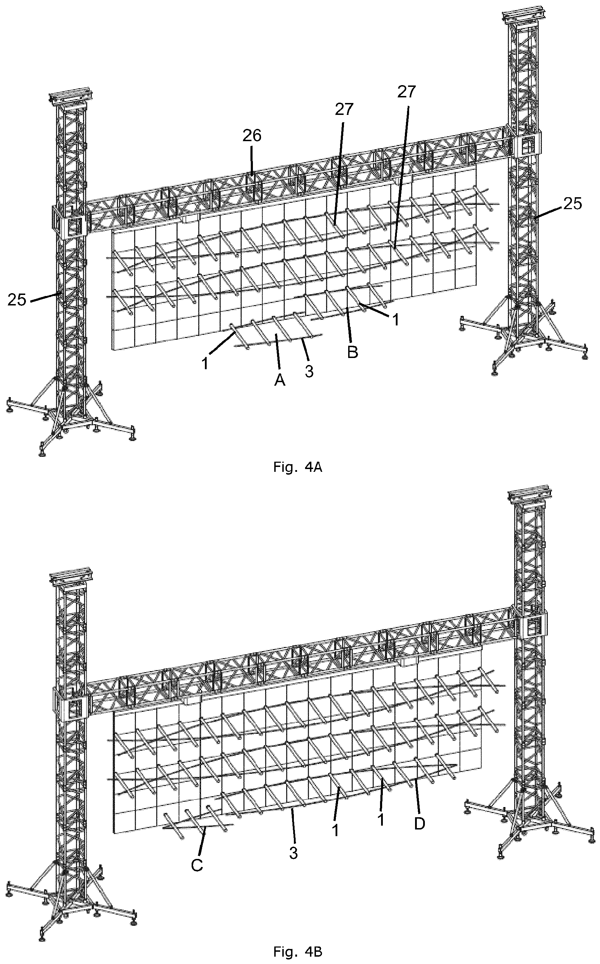

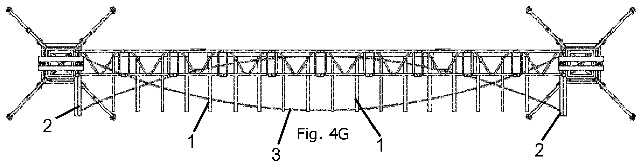

Figures 4A-4F disclose a possible step-by-step process of setting up back trussing for a multi-panel screen, which is supported by an arched support structure, comprising two upstanding truss legs (25), and one lying truss (26) supported by said upstanding truss legs. In the past, the screen-to-be-supported was suspended from the lying truss (and often anchored to the ground at the bottom of the screen). However, this allowed too much margin for movement and twisting of the screen, especially as they are flexible (or in case of a multi-panel screen, flexibly attached). Simply anchoring the sides of the screen to the truss legs is insufficient, as this only stabilizes outer sections of the screen, puts too much pressure on said sections and allows exertion of too high forces there as well.

In setting up, the rods are affixed to the screen per (horizontal) level. In Figures 4A-4F, the method uses a modular set-up of each level of the rods, but the person skilled in the art could readily transplant the teachings to other versions, wherein the rods of a level are attached as a whole.
In Fig. 4A, two levels (27) of guiding rods are already attached to the higher levels of screen panels (although no connector rods are yet provided in this embodiment). A third level of guiding rods is at achieved by attaching two sets of each 4 guiding rods (1) with prefixed cables (3) to the panels (14), which cables are fixated by the cable guides (4a) in predefined positions. The guiding rods (1) are connected to the panels (14) via the connection means (11, 12), and subsequently, the two sets A and B of guiding rods are connected to each other. Note that said connection between the two sets A and B can be accomplished via the two cables (optionally via an additional connection element, such as a shackle), or by attaching the cables of the first set to a guiding rod of the second set, and/or vice versa. The second option can be achieved by providing the outer guiding rods of the sets a specific fixation element (such as the connector rods), for instance a rope jammer. Preferably, the cable guides are fixedly positioned along the lengths of the rods in the desired position, as it easier to fix them previous to mounting. Note that the sets are not necessarily attached concurrently, and will typically be attached sequentially.

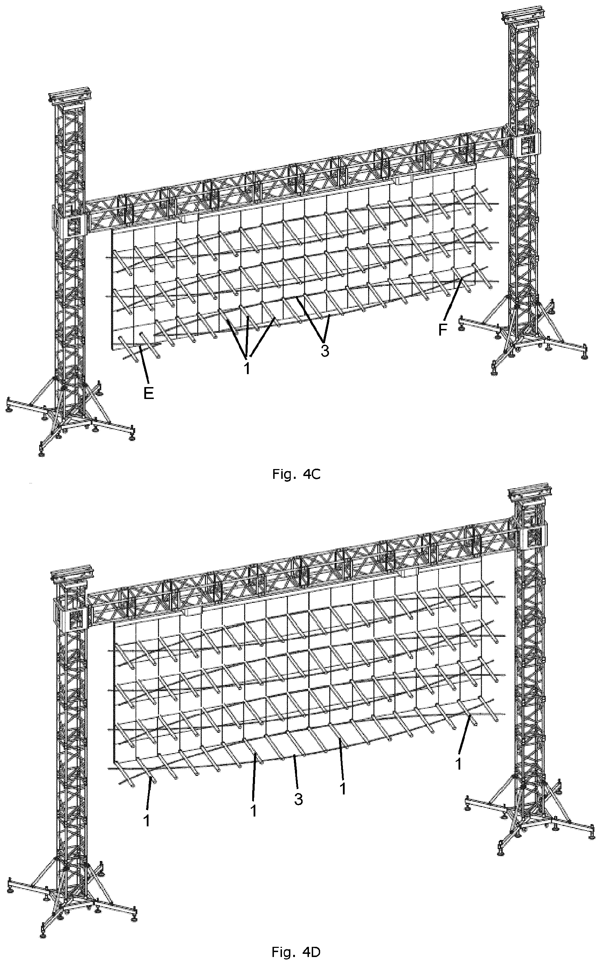

After attachment of the first sets A and B, further sets C, D, E and F are attached to complete the support on this row, as can be seen in Figures 4B and 4C. An additional row is added in Figure 4D.

At any time, the connector rods (2) can be provided and attached to the upstanding truss legs, and secured to the guiding rods (1) via the cables (3).

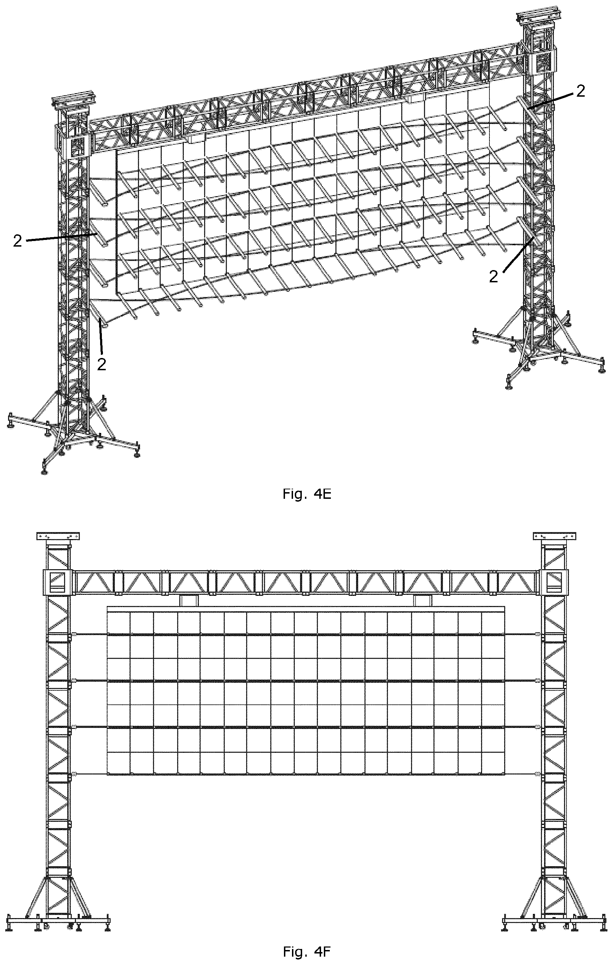

Figures 4E and 4F show a frontal and top view of the structure of Figure 4D.

It is supposed that the present invention is not restricted to any form of realization described previously and that some modifications can be added to the presented example of fabrication without reappraisal of the appended claims. For example, the present invention has been described referring to large-scale screens but it is clear that the invention can be applied to modular LED screens, as well as to non-electronic screens and panels, and other large-scale structures which require back support against wind and such.

## Claims

1. Kit for back trussing for screens, preferably LED screens, said kit comprising a plurality of elongate, rigid rods, said plurality of rods comprising:
a. two connector rods, each of said connector rods comprising:
i. at least one, preferably at least two, trussing connection means for removable fixation to fixed support structures;
ii. at least two cable guides, whereby said cable guides are adapted to be removably fixed in position along the length of the connector rods, and said cable guides being adapted for guiding a cable and fixing said cable at a position along the length of the connector rods, preferably each of said cable guides being movable along at least part of the length of the connector rods;
b. one or more guiding rods, said guiding rods comprising:
i. at least two cable guides, each of said cable guides being movable along at least part of the length of the guiding rods, whereby said cable guides are adapted to be removably fixed in position along said length of the guiding rods, and said cable guides being adapted for guiding a cable and fixing said cable at a position along the length of the connector rods;
ii. a connection means at a first end of the guiding rods, said connection means being adapted for removably affixing the guiding rods to the screens.

2. Kit for back trussing for screens according to claim 1, wherein the cable guides of the guiding rods, and preferably of the connector rods, are configured for guiding the cable across the longitudinal axis of said rods.

3. Kit for back trussing for screens according to claim 1 or 2, wherein at least one, preferably all, of the cable guides of the guiding rods and/or connector rods comprises a directional tensioning means, said directional tensioning means adapted for allowing passage of a cable in a first direction, and counteracting passage of the cable in a second direction opposite to the first direction, preferably wherein the directional tensioning means comprises at least one cam cleat.

4. Kit for back trussing for screens according to claim 2 or 3, wherein the cable guides comprising a directional tensioning means are further provided with at least one secondary guiding means for directing the cable passing through the directional tensioning means, said secondary guiding means adapted to delimit non-longitudinal movement of the cable with respect to the rod.

5. Kit for back trussing for screens according to claim 4, wherein the cable guides are provided with two secondary guiding means positioned in each direction in view of the directional tensioning means.

6. Kit for back trussing for screens according to any one of the preceding claims 1 to 5, wherein said kit comprises connection elements for interfacing the connection means of the guiding rods and the screens, said connection elements being adapted to releasably engage at a first end with the connection means, preferably said connection elements comprising a second end provided with a screw thread for interfacing with an associated screw thread opening of the screen.

7. Kit for back trussing for screens according to any one of the preceding claims 1 to 6, wherein the guiding and/or connector rods comprise rails, said rails preferably being disposed on the inside of the rods, over at least part of the length of the rods, and wherein the cable guides are slidably or rollably movable via said rails.

8. Kit for back trussing for screens according to any one of the preceding claims 1 to 7, wherein the trussing connection means is movable along at least part of the length of the connector rods, preferably at least 30% of said length, whereby said trussing connection means is adapted to be removably fixed in position along the length of the connector rods.

9. Kit for back trussing for screens according to any one of the preceding claims 1 to 8, wherein the length along which the cable guides are movable along the length of the guiding rods is at least 30 cm, preferably at least 40 cm.

10. Kit for back trussing for screens according to any one of the preceding claims 1 to 9, wherein the guiding rods are generally cylindrical, and comprise two longitudinal mantle sections, said mantle sections being connected to each other at their respective ends via end spacer elements, and at an interior position, preferably near the middle of the mantle sections, via a middle spacer element, said end spacer elements being functional as connection means adapted for removably affixing the guiding rods to the screens.

11. Kit for back trussing for screens according to the preceding claim 10 , wherein the mantle sections define a rail system, and wherein the cable guides are positioned between the two mantle sections, and are rollably or slidably movable along at least part of the length of the rods over said rail system.

12. Back trussing assembly for supporting screens, preferably LED screens, mounted on an arched support structure, said back trussing assembly comprising a plurality of elongate, rigid rods, said plurality of rods comprising:
a. two connector rods, each of said connector rods comprising:
i. at least one, preferably at least two, trussing connection means for removable fixation to fixed support structures;
ii. at least two cable guides, whereby said cable guides are adapted to be removably fixed in position along the length of the connector rods, and said cable guides being adapted for guiding a cable and fixing said cable at a position along the length of the connector rods, preferably each of said cable guides being movable along at least part of the length of the connector rods;
b. at least four guiding rods, said guiding rods comprising:
i. at least two cable guides, each of said cable guides being movable along at least part of the length of the guiding rods, whereby said cable guides are adapted to be removably fixed in position along said length of the guiding rods, and said cable guides being adapted for guiding a cable and fixing said cable at a position along the length of the connector rods;
ii. a connection means at a first end of the guiding rods, said connection means being adapted for removably affixing the guiding rods to the screens;
said back trussing assembly further comprising at least two cables, said cables being affixed at a first end to separate cable guides of a first connector rod and at the second end to separate cable guides of the second connector rod, whereby each of said cables run through a separate cable guide of each of the guiding rods in a sequence, said guiding rods being spaced apart along the length of the cables;
wherein the connector rods are each affixed to opposite support columns of the arched support structure, preferably at similar height, via the trussing connection means, and wherein the guiding rods are each affixed to the screens via the connection means;
wherein the cable guides of the connector rods are positioned to distance the cables from each other over at least 70 cm;
wherein the cable guides of the guiding rods are positioned to distance the cables from each other over at least 60 cm over a central region along the length of the cables;
wherein the cables cross at least once, preferably only once, in each region flanking the central region.

13. Method for providing a back trussing for screens supported by an arched support structure, using one or more kits for back trussing for screens according to any one of the preceding claims 1 to 11, and one or more sets of two cables, wherein the back trussing of a kit is deployed comprising the following steps for each kit and set:
a. affixing the cables at a first end to a separate cable guide of a first connector rod;
b. extending the cables through a separate cable guide of each of the guiding rods in sequence;
c. affixing the cables at the second end to a separate cable guide of the second connector rod;
whereby the cable guides of the connector rods are positioned to distance the cables from each other over at least 70 cm;
whereby the cable guides of the guiding rods are positioned to distance the cables from each other over at least 60 cm over a central region along the length of the cables;
whereby the cables cross at least once, preferably only once, in each region flanking the central region;
d. affixing the connection means of the guiding rods to the screens, preferably equidistantially with respect to each other;
e. affixing the connector rods via the trussing connection means to opposite upstanding support columns of the arched support structure.

14. Method for providing a back trussing according to the preceding claim 13, wherein the screen comprises multiple horizontal rows of modular subscreens, preferably LED screens, wherein the method comprises a step preceding the step a. of:
providing a horizontal row of subscreens to which the connection
means of the guiding rods is affixed;
wherein the method comprises a step succeeding the step e. of:
lifting the horizontal row of subscreens;
after which the method is repeated after affixing a new horizontal row of subscreens to the lifted horizontal row of subscreens.

15. Method for providing a back trussing according to any of the preceding claims 13 or 14, comprising the steps of:
- fixedly positioning the cable guides of the connector rods from each other at least 70 cm apart;
- fixedly positioning the cable guides of the guiding rods from each other at least 60 cm apart over a central region along the length of the cables;
wherein the cables are extended through the cable guides to cross at least once, preferably only once, in each region flanking the central region.
